# EUROPÄISCHE PATENTANMELDUNG

(11) **EP 1 132 563 A2**
(43) Veröffentlichungstag der Anmeldung: **12.09.2001**
(21) Anmeldenummer: 01104101.9
(22) Anmeldetag: 21.02.2001
(51) Int. Cl.: E06B 5/16, B29C 47/06, C09K 21/14

(54) **Intumeszierende, dreiseitig ummantelte Brandschutzstreifen und kombinierte Kalt-Heissgasdichtung**

(30) Priorität: 07.03.2000 AT 3762000
(71) Anmelder: Intumex Brandschutzprodukte AG, 4021 Linz (AT)
(72) Erfinder: Horacek, Heinrich, 4040 Linz (AT)
(74) Vertreter: Klostermann, Ingrid

(57) **Zusammenfassung**

Coextrudierte, intumeszierende, dreiseitig ummantelte Brandschutzstreifen, die durch Coextrusion einer intumeszierenden Masse bestehend aus einem thermoplastischen Elastomeren mit einer Verarbeitungstemperatur von maximal 250°C aus der Gruppe der Blockcopolymeren oder der unvernetzten, thermoplastischen Polyolefinen, mit Schwefelsäure behandeltem Graphit, Flammhemmer und einem Email oder Keramik bildenden anorganischen Zusatz und einer dreiseitigen Ummantelung, gegebenenfalls in Verbindung mit einem Kammerprofil, bestehend aus einem thermoplastischen Elastomeren mit einer Verarbeitungstemperatur von maximal 250°C aus der Gruppe der Blockcopolymeren oder der unvernetzten, thermoplastischen Polyolefinen, Flammhemmer und gegebenenfalls einem Farbpigment erhalten werden, wobei die Brandschutzstreifen sowohl als Heißgasdichtung als auch als kombinierte Kalt-Heißgasdichtung mit räumlich getrennten Funktionen ausgebildet sein kann.

## Beschreibung

Die Erfindung betrifft intumeszierende, dreiseitig ummantelte Brandschutzstreifen und kombinierte Kalt- Heißgasdichtungen, die durch Koextrusion hergestellt werden.

Intumeszierende Streifen, die beispielsweise als Heißgasdichtung für Brandschutztüren oder -fenster eingesetzt werden, sind in den verschiedensten Varianten bekannt.
So beschreibt beispielsweise WO 98/30654 ziemlich allgemein eine halogenfreie intumeszierende Komposition, die ein Trägermaterial und eine intumeszierende Komponente enthält. Als Trägermaterial werden dabei diverse halogenfreie thermisch verformbare Polymere angegeben. Die intumeszierende Komponente kann beispielsweise Graphit oder Vermiculit sein. Zusätzlich kann diese Komposition noch einen oder mehrere halogenfreie Flammhemmer enthalten. Die einzelnen Bestandteile werden zuerst vermischt und dann als Streifen extrudiert. Gegebenenfalls kann dieser Streifen noch ummantelt werden. Die Ummantelung kann dabei aus einem starren oder einem flexiblen Kunststoff bestehen und enthält keine weiteren Bestandteile. Versuche oder Hinweise auf die Funktionalität der beanspruchten Streifen sind in WO 98/30654 nicht enthalten.
EP-A1-0 509 701 beschreibt einen Brandschutzstreifen der aus einem durch einen starren Kunststoff, wie starres Polyvinylchlorid (PVC) ummantelten, intumeszierenden Material, wie Palusol, besteht, wobei die Ummantelung mit einem flexiblen Dichtungsteil aus einem flexiblen Kunststoff, wie etwa PVC oder einem flexiblen thermoplastischen Elastomer, das mit starrem PVC kompatibel ist, verbunden ist.
Eine weitere Variante ist aus EP-B1-0 745 751 bekannt. Gemäß EP-B1-0 745 751 werden 2 Arten von intumeszierenden Streifen hergestellt. So wird ein vollständig ummantelter Streifen durch Coextrusion eines längsförmigen Trägers mit einem inneren Hohlraum aus vorzugsweise starrem PVC und eines längsförmigen Einsatzes aus einem flexiblen aufschwellenden Material, der in den Hohlraum des Trägers extrudiert wird, hergestellt. Dabei wird der Träger mit einer relativ hohen Temperatur extrudiert, während der Einsatz mit einer niedrigen Temperatur extrudiert wird. Die extrudierten Komponenten müssen dabei zuerst schnell durch eine gekühlte Formvorrichtung und anschließend durch eine weitere Kühlvorrichtung geleitet werden. Um einen dreiseitig ummantelten Brandschutzstreifen zu erhalten, wird der intumeszierende Einsatz im Anschluß an das Strangpressen des Trägers in dessen Hohlraum extrudiert.

Aufgabe der vorliegenden Erfindung war es neue Brandschutzstreifen zu finden, die erstens gegenüber dem Stand der Technik verbesserte Eigenschaften, wie höheren Expansionsfaktor, höheren Glührückstand und höhere Fugenstandzeit ("Blow out time"), aufweisen und die zweitens durch einfache Coextrusion ohne aufwendige Zusatzvorrichtungen, wie etwa Kühlvorrichtungen, in verschiedenen Breiten herstellbar sind.

Unerwarteterweise konnte diese Aufgabe durch einen dreiseitig ummantelten Streifen gelöst werden, bei welchen sowohl die Ummantelung, als auch die intumeszierende Masse aus speziellen thermoplastischen Elastomeren, die hochgradig füllbar sind, bestehen und die in der intumeszierenden Masse u.a. einen mit Schwefelsäure behandelten Graphit enthalten.

Gegenstand der vorliegenden Erfindung sind demnach coextrudierte, intumeszierende, dreiseitig ummantelte Brandschutzstreifen, die dadurch gekennzeichnet sind, dass sie aus
a) einer intumeszierenden Masse aus
   a₁) einem thermoplastischen Elastomeren mit einer Verarbeitungstemperatur von maximal 250°C aus der Gruppe der Blockcopolymeren oder der unvernetzten, thermoplastischen Polyolefinen,
   a₂) mit Schwefelsäure behandeltem Graphit,
   a₃) Flammhemmer und
   a₄) einem Email oder Keramik bildenden anorganischen Zusatz
   und
b) einer dreiseitigen Ummantelung gegebenenfalls in Verbindung mit einem Kammerprofil aus
   b₁) einem thermoplastischen Elastomeren mit einer Verarbeitungstemperatur von maximal 250°C aus der Gruppe der Blockcopolymeren oder der unvernetzten, thermoplastischen Polyolefine,
   b₂) Flammhemmer und gegebenenfalls
   b₃) einem Farbpigment
bestehen und die durch Coextrusion von a) und b) erhalten werden.

Die erfindungsgemäßen Brandschutzstreifen bestehen somit aus einer intumeszierenden Masse a), die dreiseitig von der Ummantelung b) umgeben ist.
Sowohl die intumeszierende Masse a) als auch die Ummantelung enthalten ein thermoplastisches Elastomeres (TPE) mit einer Verarbeitungstemperatur von maximal 250°C aus der Gruppe der Blockcopolymeren oder der unvernetzten, thermoplastischen Polyolefine.
Bevorzugt weisen die eingesetzten TPEs eine Verarbeitungstemperatur von maximal 200°C auf.
Geeignete TPEs sind Blockcopolymere vom Styroltyp (TPE-S), wie etwa Styrol-Butadien-Styrol-Blockcopolymere oder Styrol-Isopren-Styrol-Blockcopolymere (z.B. Kraton D, Fa. Shell Chemical) oder Styrol-Ethylen-co-Butadien-Styrol-Blockcopolymere (z.B. Kraton G, Fa. Shell Chemical), Polyetherpolyamid-Blockcopolymere (TPE-A), (z.B. Pebax, Fa. Atochem), Polyurethanpolyether- oder polyester-Blockcopolymere (TPE-U), (z.B. Elastollan, Fa. BASF) oder Polyetherpolyester-Blockcopolymere (TPE-E), (z.B. Hytrel, Fa. DuPont).
Weiters eignen sich unvernetzte, thermoplastische Polyolefinen (TPE-O). Dies sind Ethylen-Octen-Copolymere, die beispielsweise mittels Metallocen-Katalyse hergestellt werden. (z.B. Engage, Fa. DuPont oder Exact, Fa. DSM).
Gegebenenfalls können dem verwendeten TPE übliche Zusätze, wie etwa Schlagzäh-Modifikatoren, Haftvermittler, Antioxidantien u.s.w. zugesetzt werden. Als Schlagzäh-Modifikatoren und Haftvermittler kommen beispielsweise solche aus der Familie der polyolefinischen Kunststoffe, die mit einer reaktiven Maleinsäure-Anhydrid-Gruppe gepfropft sind (z.B.Fusabond, Fa. DuPont), Random-Copolymere mit Methacrylsäure-Funktionalität in einem Polyethylen-Grundgerüst (z.B. Surlyn Fa. DuPont) oder Polymere, in deren Grundgerüst Glycidylmethacrylat als reaktive Gruppe zusammen mit Ethylen- und Acrylateinheiten statistisch verteilt sind (z.B. Elvaloy, Fa. DuPont) in Frage. Bevorzugt sind dabei Polymere, in deren Grundgerüst Glycidylmethacrylat als reaktive Gruppe zusammen mit Ethylen- und Acrylateinheiten statistisch verteilt sind.
Als Antioxidantien kommen beispielsweise Verbindungen auf Basis von Benzol-Propionsäurederivaten, wie etwa Irganox der Fa. Ciba-Geigy oder Verbindungen auf Basis von Phosphor-haltigen Bis-dimethylethylphenylderivaten, wie etwa Irgafos der Fa. Ciba-Geigy zum Einsatz.
Weiters kann dem entsprechenden TPE aus wirtschaftlichen Gründen ein kompatibles Polymer, wie etwa Polyethylen (z.B. LLDPE) zur Verdünnung zugesetzt werden.
Bevorzugt werden diese Zusätze den TPE-O's zugegeben. Die Blockcopolymere werden bevorzugt ohne Zusätze eingesetzt, es ist jedoch möglich einen Block durch Zugabe eines geeigneten Polymers zu verdünnen. Beispielsweise kann einem Styrol/Butadien/Styrol-Blockcopolymeren Polybutadien oder Polystyrol zugegeben werden.

Der Anteil an TPE oder gegebenenfalls an TPE in Kombination mit einem der oben erwähnten Zusätze liegt sowohl bei der intumeszierenden Masse a) als auch bei der Ummantelung bei etwa 20 bis etwa 80 Gew.%., bevorzugt bei 25 bis 60 Gew.%.
Der Anteil an TPE in der Ummantelung ist dabei bevorzugt höher als der in der intumeszierenden Masse.
Bevorzugt wird weiters für die intumeszierende Masse a) und für die Ummantelung b) das gleiche TPE verwendet.

Die intumeszierende Masse a) enthält neben dem TPE (a1) noch einen mit Schwefelsäure behandelter Vermikulargraphit (S-Graphit) (a2). Die Menge an S-Graphit liegt zwischen 10 und 50 Gew.%, bevorzugt zwischen 20 und 45 Gew.%.

Als dritte Komponente a₃) enthält die intumeszierende Masse a) einen Flammhemmer. Bevorzugt werden halogenfreie Flammhemmer eingesetzt. Besonders bevorzugt sind Stickstoffphosphorverbindungen, wie Melaminphosphate, Guanidinphosphate, Ammoniumhydrogenphosphate, Trihydrazinophosphate u. s.w., insbesondere Ammoniumpolyphosphat oder Ethylendiaminphosphat, oder Hydroxyde, wie Magnesium- oder Aluminiumhydroxyde.
Der Flammhemmer wird dabei in einer Menge von 1 bis 10 Gew.%, bevorzugt von 2 bis 8 Gew.% zugesetzt.

Zusätzlich zu diesen Bestandteilen enthält die intumeszierende Masse a) noch einen Email oder Keramik bildenden anorganischen Zusatz a4). Dies können neutrale Metalloxydverbindungen oder -mischungen, wie etwa Ton, Kaolin, Zinkborat, Calciumphosphat oder Feldspat u.s.w., aber auch Mischungen aus sauren Oxyden, wie etwa Siliziumdioxyd, Boroxyd, Phosphoroxyd u.s.w mit basischen Oxyden, wie etwa Kalium-, Natrium-, Calzium-, Aluminium-, Zink-, Titan- oder Magnesiumoxyde u.s.w. sein. Komponente a₄) kann dabei aus einem oder aus mehreren anorganischer Zusätzen bestehen.
Komponente a₄) wird dabei in einer Menge von 5 bis 30 Gew.%, bevorzugt von 10 bis 20 Gew.%, zugegeben.

Bei der Zusammensetzung der intumeszierenden Masse ist zu beachten, dass die Gesamtmenge aller Komponenten 100 Gew.% nicht übersteigt.

Die Ummantelung b) enthält neben dem TPE ebenfalls einen Flammhemmer b2). Der eingesetzte Flammhemmer ist wiederum bevorzugt halogenfrei. Geeignete Flammhemmer sind Aluminiumtrihydrat oder die oben erwähnten Stickstoffphosphorverbindungen, u.s.w. Der Anteil an Flammhemmer in der Ummantelung beträgt 10 bis 50 Gew.%, bevorzugt 15 bis 40 Gew%.

Gegebenenfalls kann die Ummantelung noch ein Farbpigment b₃) enthalten. Dies wird in einer Menge von 0,5 bis 5 Gew.%, bevorzugt von 0,8 bis 3 Gew.%. zugesetzt.

Auch bei der Ummantelung ist darauf zu achten, dass die Gesamtmenge aller Komponenten 100 Gew.% nicht übersteigt.

Die erfindungsgemäßen Brandschutzstreifen können als Heißgasdichtung, beispielsweise für Brandschutztüren oder -fenster eingesetzt werden.
In einer besonderen Ausführungsform ist der erfindungsgemäße Brandschutzstreifen so aufgebaut, dass er sowohl als Heißgas-, aber auch als Kaltgasdichtung fungieren kann. Diese kombinierte Kalt- und Heißgasdichtung weist dabei räumlich getrennte Funktionen auf. Dies wird dadurch erreicht, dass die Ummantelung b) nicht nur die intumeszierende Masse a) an drei Seiten umgibt, sondern dass sie weiters ein als Kaltgasdichtung dienendes Kammerprofil aufweist. Diese kombinierten Kalt- und Heißgasdichtungen werden in einem Stück hergestellt.
Die erfindungsgemäßen Brandschutzstreifen bzw. kombinierte Kalt- und Heißgasdichtung werden durch Coextrusion der intumeszierenden Masse a) und der Ummantelung b) erhalten.
Zur Herstellung der erfindungsgemäßen Brandschutzstreifen mittels Coextrusion wird eine Coextrusionsapparatur bestehend aus einem Zweischneckenextruder für die intumeszierende Masse a), einem Einschneckenextruder für die Ummantelung b), einem Koextrusionswerkzeug, das die Herstellung verschieden breiter Streifen ermöglicht (mehrteiliger Aufsatz mit verschieden breiten konisch verlaufenden Schlitzdüsen, wobei die Breite der Streifen durch die Anzahl der verwendeten Aufsatzteile variiert werden kann), gegebenenfalls einem Walzenabzug zur Erzielung besonders glatter Oberflächen und einer Aufwicklung für den dreiseitig ummantelten Brandschutzstreifen. Kühlvorrichtungen, wie sie etwa in EP-B1-0 745 751 unbedingt erforderlich sind, werden zur Herstellung des erfindungsgemäßen coextrudierten Brandschutzstreifens nicht benötigt.
Weiters befinden sich, im Gegensatz zu EP-B1-0 745 751, beide Extruder auf der gleichen Temperatur.
Durch das Koextrusionswerkzeug wird die Herstellung von Streifen mit einer Breite von 10 bis 60 mm und einer Dicke von 1 bis 5 mm je nach Anzahl der verwendeten Aufsatzteile ermöglicht, wobei sich die erfindungsgemäßen Brandschutzstreifen endlos rollen lassen.

Ein weiterer Gegenstand der Erfindung ist ein Verfahren zur Herstellung erfindungsgemäßen coextrudierten, intumeszierenden, dreiseitig ummantelten Brandschutzstreifen, das dadurch gekennzeichnet ist, dass die Ummantelung b) bei einer Verarbeitungstemperatur von max. 250°C, bevorzugt von max. 200°C mittels eines Einschneckenextruders extrudiert wird und gleichzeitig die intumeszierende Masse a) bei einer Verarbeitungstemperatur von max. 250°C, bevorzugt von max. 200°C mittels eines Zweischneckenextruders in den Hohlraum der Ummantelung extrudiert wird, worauf durch ein geeignetes Koextrusionswerkzeug, bestehend aus einem mehrteiligen Aufsatz mit verschieden breiten konisch verlaufenden Schlitzdüsen, coextrudierte, intumeszierende, dreiseitig ummantelte Brandschutzstreifen in einer Breite von 10 bis 60 mm und einer Dicke von 1 bis 5 mm erhalten werden, die gegebenenfalls mittels eines Walzenabzuges geglättet werden und anschließend aufgerollt werden.
Im Falle der kombinierten Kalt- und Heißgasdichtungen wird die Ummantelung in einer geeigneten Form extrudiert, die ein für Kaltgasdichtungen geeignetes Kammerprofil und den zur Aufnahme der intumeszierenden Masse bestimmten Hohlraum aufweist.
Die so hergestellten erfindungsgemäßen Brandschutzstreifen bzw. kombinierten Kalt- und Heißgasdichtungen zeichnen sich durch über den Stand der Technik verbesserte Eigenschaften, wie höherer Expansionsfaktor, der bei 300°C mindestens 1:5 beträgt und bis zu 1: 9 erreicht, höherer Glührückstand und höherer "Blow out time", sowie einfache Herstellweise aus.

### Beispiel 1:

Es wurde ein dreiseitig ummantelter Brandschutzstreifen mit folgender Zusammensetzung hergestellt:
Ummantelung b):
   - Komponente b₁) setzte sich aus 39,8 Teilen eines unvernetzten, thermoplastischen Polyolefin (TPE-O) der Marke Engage 8480 (Fa. Dupont), 30 Teilen eines Schlagzäh-Modifikators der Marke Elvaloy NH (Fa. DuPont), 30 Teilen eines Polyethylens Dowlex LLDPE (Fa. Dow), 0,1 Teilen eines Antioxydants Irganox 1010 (Fa. Ciba-Geigy) und 0,1 Teilen eines Antioxydants Irgafos 168 (Fa. Ciba-Geigy) zusammen.
      Der Anteil an Komponente b₁) in der Ummantelung betrug 60 Gew.%.
   - Komponente b₂): 39 Gew.% Aluminiumtrihydrat ATH (Magnifin, Fa. Martinswerk)
   - Komponente b₃): 1 Gew.% Farbpigment Bayferrox 140 (Fa. Bayer)
Intumeszierende Masse a):
   - Komponente a₁): bestand aus der gleichen Zusammensetzung wie b₁)
      Der Anteil an Komponente a₁) in der intumeszierenden Masse betrug 40 Gew.%.
   - Komponente a₂): 40 Gew.% S-Graphit (Fa. Kaisersberg)
   - Komponente a₃): 5 Gew.% Ammoniumpolyphosphat APP (Exolit AP 422, Fa. Clariant)
   - Komponente a₄): 15 Gew.% Ton 610 (Fa, Bischitzky & Co)

Der Batch für die intumeszierende Masse wurde getrennt in den Leistritz-Zweischneckenextruder dosiert, wobei das Polymer in die Zone 1 und die restliche Pulvermischung in die Zone 5 zudosiert wurde.
Der Ummantelunlgsbatch wurde in einen Brabender-Einschneckenextruder dosiert.
Das Temperaturprofil im Brabender betrug 150°C (Zone 1) bis 180°C (Zone 5) und im Leistritz-Extruder 140°C (Zone 1) bis 180°C (Zone 10).

Durch das Koextrusionswerkzeug wurden dreiseitig ummantelte Streifen mit den Abmessungen 10 mm breit, 3,5 mm dick erhalten.

Als Vergleich dazu wurde ein Brandschutzstreifen aus PVC hergestellt.
Die Umhüllung bestand aus 99 Gew. % eines flammgeschützten Weich-PVC der Fa. Peng Mayer und Drössler (Madroplast 5330FS) und 1 Gew.% Farbpigment Bayferrox 140 (Fa. Bayer).
Die intumeszierende Masse setzte sich aus 59 Gew.% Madroplast 5330FS, 24 Gew.% S-Graphit (Fa. Kaisersberg), 7 Gew.% Ton 601 (Fa. Bischitzky & Co) und 10 Gew.% Ammoniumpolyphosphat (Exolit AP 422, Fa. Clariant) zusammen. Der Batch für die intumeszierende Masse wurde getrennt in den Leistritz-Extruder dosiert, wobei das PVC-Granulat in die Zone 1 und die restliche Pulvermischung in die Zone 5 zudosiert wurde.
Die Extrusion erfolgte analog obigen Bedingungen.

Als weiterer Vergleich diente ein Brandschutzstreifen ebenfalls auf Basis von PVC entsprechend dem Stand der Technik EP 0 745 751.

Die mechanischen und brandtechnischen Eigenschaften sind in Tabelle 1 zusammengefasst.
Dimension der Streifen war jeweils 10mm x 3,5mm

**Tabelle 1:**

| **Produkt** | Beispiel 1 | Vergleichsbeispiel | EP 0 745 751 |
|---|---|---|---|
| Start Expansion | 200°C | 200°C | 210°C |
| Expansionsfaktor (bei 300°C) | 1:9 | 1:5 | 1:4,5 |
| Glührückstand Gew.%, 1000°C | 20 | 7 | 10 |
| Glührückstand Gew.%, 450°C | >50 | >35 | >40 |
| Blow out time | 300 min | 200min | 150 min |

### Beispiel 2-7:

Analog Beispiel 1 wurden 6 weitere dreiseitig ummantelte Streifen mit den Abmessungen 20 mm breit und 2,1mm dick hergestellt.
Die Zusammensetzungen und Eigenschaften sind aus Tabelle 2 und 3 ersichtlich:
Es wurden folgende Einsatzstoffe verwendet:
Exact 0230: unvernetztes, thermoplastisches Polyolefin (TPE-O), (Fa. DSM)
Engage 8480: unvernetztes, thermoplastisches Polyolefin (TPE-O), (Fa. Dupont)
Elvaloy Loy 741 CP: Schlagzäh-Modifikator (Fa. DuPont)
Dowlex LLDPE: Polyethylen (Fa. Dow)
Kraton G7720: Styrol-Ethylen-Butadien-Styrol-Blockcopolymere (Fa. Shell Chemical)
Pebax 25335NO1: Polyetherpolyamid-Blockcopolymere (TPE-A), (Fa. Atochem)
Ton 610: Fa. Bischitzky
Exolit AP 422: Ammoniumpolyphosphat APP, Fa. Clariant
Kreide, ATH(Aluminiumtrihydrat), S-Graphit, Titandioxid

**Tabelle 2:**

| **Einsatzstoffe (Gew. %)** | **/Bsp.2** | **3** | **4** | **5** | **6** | **7** |
|---|---|---|---|---|---|---|
| **a) intumesz. Masse** | | | | | | |
| | | | | | | |
| **a**₁) Engage 8480 | 18 | | | | | |
| Exact 0230 | | | | 42,5 | 46,5 | 41 |
| Elvaloy Loy 741 | 13,5 | | | | | |
| Dowex LLDPE | 13,5 | | | | | |
| Kraton G7720 | | 37,5 | | | | |
| Pebax 2533SNO1 | | | 42,5 | | | |
| **a**₂) S-Graphit | 35 | 40 | 40 | 40 | 35 | 40 |
| **a**₃) Exolit APP 422 | 5 | 5 | 5 | 5 | 5 | 5 |
| a₄) Ton 610 | 15 | 10 | 5 | 5 | 10 | 10 |
| Kreide | / | 7,5 | 7,5 | 7,5 | / | / |
| TiO₂ | | | | | 3,5 | |
| Al(OH)₃ | | | | | | 4 |

**b) Ummantelung für Bsp. 2-7**
**b**_{**1**}**) Gleiche Zusammensetzung wie a**_{**1**}**),** 80 Gew.%
**b**_{**2**}**)** 19 Gew.% ATH
**b**_{**3**}**)** 1 Gew.% Bayferrox 140

**Tabelle 3:**

| **Eigenschaften** / | **Bsp.2** | **3 4 5** | | | **6** | **7** |
|---|---|---|---|---|---|---|
| Start Expansion(°C) | 200 | 200 | 205 | 205 | 200 | 200 |
| Expansionsfaktor (bei 300°C) | 1:7 | 1:8 | 1:8 | 1:7 | 1:7 | 1:7 |
| Glührückstand Gew.%, 1000°C | 18,7 | 17,7 | 17,4 | 17,5 | 16,5 | 17,0 |
| Glührückstand Gew.%, 450°C | >65 | >60 | >60 | >60 | >60 | >65 |
| Blow out time(min) | 200 | 250 | 300 | 250 | 250 | 300 |

## Patentansprüche

1. Coextrudierte, intumeszierende, dreiseitig ummantelte Brandschutzstreifen, **dadurch gekennzeichnet, dass** sie aus
a) einer intumeszierenden Masse aus
a₁) einem thermoplastischen Elastomeren mit einer Verarbeitungstemperatur von maximal 250°C aus der Gruppe der Blockcopolymeren oder der unvernetzten, thermoplastischen Polyolefinen,
a₂) mit Schwefelsäure behandeltem Graphit,
a₃) Flammhemmer und
a₄) einem Email oder Keramik bildenden anorganischen Zusatz
und
b) einer dreiseitigen Ummantelung, gegebenenfalls in Verbindung mit einem Kammerprofil, aus
b₁) einem thermoplastischen Elastomeren mit einer Verarbeitungstemperatur von maximal 250°C aus der Gruppe der Blockcopolymeren oder der unvernetzten, thermoplastischen Polyolefinen,
b₂) Flammhemmer und gegebenenfalls
b₃) einem Farbpigment
bestehen und durch Coextrusion von a) und b) erhalten werden.

2. Brandschutzstreifen nach Anspruch 1, **dadurch gekennzeichnet, dass** als thermoplastische Elastomere a₁) und b₁) Blockcopolymere aus der Gruppe der Styrol-Butadien-Styrol-Blockcopolymeren, Styrol-Isopren-Styrol-Blockcopolymeren und Styrol-Ethylen-co-Butadien-Styrol-Blockcopolymeren, Polyetherpolyamid-Blockcopolymeren, Polyurethanpolyether- oder polyester-Blockcopolymeren, Polyetherpolyester-Blockcopolymeren, oder unvernetzte, thermoplastische Polyolefine eingesetzt werden.

3. Brandschutzstreifen nach Anspruch 1, **dadurch gekennzeichnet, dass** den thermoplastischen Elastomeren übliche Zusätze aus der Gruppe der Schlagzähmodifikatoren, Haftvermittler und Antioxidantien zugesetzt werden.

4. Brandschutzstreifen nach Anspruch 1, **dadurch gekennzeichnet, dass** der Anteil an thermoplastischen Elastomeren in der intumeszierenden Masse a) und in der Ummantelung b) zwischen 20 und 80 Gew.% liegt.

5. Brandschutzstreifen nach Anspruch 1, **dadurch gekennzeichnet, dass** die Menge an mit Schwefelsäure behandelten Graphit zwischen 10 und 50 Gew.% beträgt.

6. Brandschutzstreifen nach Anspruch 1, **dadurch gekennzeichnet, dass** als Flammhemmer a₃) und b₂) Stickstoffphosphorverbindungen aus der Gruppe der Melaminphosphate, Guanidinphosphate, Ammoniumhydrogenphosphate, Ammoniumpolyphosphate, Trihydrazinophosphate oder Ethylendiaminphosphat, oder Hydroxyde, wie Magnesium- oder Aluminiumhydroxyde, oder Hydrate, wie Aluminiumtrihydrat eingesetzt werden, wobei der Anteil an a₃) in der intumeszierenden Masse a) 1 bis 10 Gew.% und der Anteil an b₂) in der Ummantelung 10 bis 50 Gew.% beträgt.

7. Brandschutzstreifen nach Anspruch 1, **dadurch gekennzeichnet, dass** als Email oder Keramik bildender anorganischer Zusatz a₄) neutrale Metalloxydverbindungen oder -mischungen, aus der Gruppe Ton, Kaolin, Zinkborat, Calciumphosphat oder Feldspat, oder Mischungen aus sauren Oxyden aus der Gruppe Siliziumdioxyd, Boroxyd, Phosphoroxyd mit basischen Oxyden aus der Gruppe Kalium-, Natrium-, Calzium-, Aluminium-, Zink-, Titan- oder Magnesiumoxyde eingesetzt werden, wobei der Anteil an a₄) zwischen 5 bis 30 Gew.% beträgt.

8. Brandschutzstreifen nach Anspruch 1, **dadurch gekennzeichnet, dass** sie als kombinierte Kalt- und Heißgasdichtung mit räumlich getrennten Funktionen ausgebildet sind, wobei die dreiseitige Ummantelung b) mit einem als Kaltgasdichtung dienendem Kammerprofil, das die gleiche Zusammensetzung wie die Ummantelung aufweist, kombiniert ist.

9. Brandschutzstreifen nach Anspruch 1, **dadurch gekennzeichnet, dass** sie einen Expansionsfaktor bei 300°C von 1:5 bis 1:9 aufweisen.

10. Verfahren zur Herstellung von Brandschutzstreifen gemäß Anspruch 1, **dadurch gekennzeichnet, dass** die Ummantelung b) bei einer Verarbeitungstemperatur von max. 250°C mittels eines Einschneckenextruders extrudiert wird und gleichzeitig die intumeszierende Masse a) bei einer Verarbeitungstemperatur von max. 250°C mittels eines Zweischneckenextruders in den Hohlraum der Ummantelung extrudiert wird, worauf durch ein geeignetes Koextrusionswerkzeug, bestehend aus einem mehrteiligen Aufsatz mit verschieden breiten, konisch verlaufenden Schlitzdüsen coextrudierte, intumeszierende, dreiseitig ummantelte Brandschutzstreifen in einer Breite von 10 bis 60 mm und einer Dicke von 1 bis 5 mm erhalten werden, die gegebenenfalls mittels eines Walzenabzuges geglättet werden und anschließend aufgerollt werden.
